# NEUE EUROPÄISCHE PATENTSCHRIFT

(11) **EP 0 394 391 B2**
(45) Veröffentlichungstag und Bekanntmachung des Hinweises auf die Entscheidung über den Einspruch: **13.09.1995**
(45) Hinweis auf die Patenterteilung: 16.12.1992
(21) Anmeldenummer: 89910413.7
(22) Anmeldetag: 25.09.1989
(51) Int. Cl.: B09B 3/00, B03B 9/04

(54) **VERFAHREN UND VORRICHTUNG ZUM AUFBEREITEN VON SCHLACKE UND ANDEREN VERBRENNUNGSRÜCKSTÄNDEN AUS ABFALLVERBRENNUNGSANLAGEN**
PROCESS AND DEVICE FOR PROCESSING SLAG AND OTHER COMBUSTION RESIDUES FROM WASTE INCINERATION PLANTS
PROCEDE ET DISPOSITIF DE TRAITEMENT DE SCORIES ET AUTRES RESIDUS DE COMBUSTION PROVENANT D'INSTALLATIONS D'INCINERATION DE DECHETS

(30) Priorität: 13.10.1988 CH 3827/88
(43) Veröffentlichungstag der Anmeldung: 31.10.1990
(73) Patentinhaber: LEO SCHWYTER AG, CH-8486 Rikon im Tösstal (CH)
(72) Erfinder: SCHWYTER, Leo, CH-8370 Sirnach (CH)
(74) Vertreter: Bruderer, Werner
(86) Internationale Anmeldenummer: CH8900174
(87) Internationale Veröffentlichungsnummer: WO9003856

(56) Entgegenhaltungen:
- EP-A- 0 241 635
- DE-A- 2 436 296
- DE-A- 3 206 984
- DE-A- 3 334 743
- DE-A- 3 635 068
- DE-B- 1 173 851
- US-A- 4 669 397
- Energie Spektrum, nr.4, April 1986, (Gräfelfing, DE) "Müll-Markt, vom Anlagenbau zum Service" S.96,98,99,100,102

## Beschreibung

Die Erfindung betrifft ein Verfahrer. zum Aufbereiten von Schlacke oderanderen Verbrennungsrückständen aus Abfallverbrennungsanlagen, wobei nach dem. Austrittaus dem Verbrennungsofen unverbranntes Grobgut und magnetische Teile aus der Schlacke ausgeschieden und die heissen Rauchgase über einen Rauchgaskanal abgeführt werden sowie eine Vorrichtung zur Durchführung des Verfahrens.

Bei Abfallverbrennungsanlagen treten bekanntlich Verbrennungsrückstände in der Form von Schlacke, Flugasche und Filterstaub auf, welche relativstark mit umweltschädlicher. Schadstoffen belastet sind. Die in Kehricht- und Abfallverbrennungsöfen anfallende Schlacke bildet mengenmässig den grössten Anteil der Verbrennungsrückstände. Die Schlacke weist beim Austritt aus der Verbrennungsanlage Gehalte an Schadstoffen auf, welche deren weitere Verwendung, z.B. als Baustoff verhindern und auch die Ablagerung der Schlacke in Deponien zu einer Umweltgefährdung werden lässt. Der Gehalt an Schadstoffen ist abhängig von der Zusammensetzung des zur Verbrennung angelieferten Kehrichts bzw,. Abfalles und auch von der Qualität des Verbrennungsprozesses. Im Durchschnittdürfte sich der Schadstoffgehalt von Schlacken aus Hausmüllverbrennungsanlagen im Bereiche von ca. 50 bis 100 g pro kg Schlacke bewegen. Die in der Schlacke enthaltenen Schadstoffe sind dabei insbesondere Chlorid, Blei, Kadmium, Zink, Eisen, Kupfer, organische Stoffe und andere Verunreinigungen. Entsprechende Analysen sind beispielsweise in der Publikation Schweizer Ingenieur und Architekt, Heft 19, 1983, veröffentlicht. Bei der Ablagerung von Schlacken aus Abfallverbrennungsanlagen in Deponien müssen die Sickerwässer aufgefangen und entsorgt werden, da sie sonst eine erhebliche Gefährdung der Umwelt darstellen. Entsprechende Probleme treten auch bei der Verwendung von Schlacke im Strassenbau auf, weshalb die Schlacke in diesen Fällen sehr oft mit Zement vermischt und wasserundurchlässig gemacht, bzw. stabilisiert, wird. Die organischen Stoffe, insbesondere Kohlenstoffverbindungen, zersetzen jedoch die Schlacke in einem Langzeitprozess, sodass auch bei stabilisierten Schlacken wieder Schadstoffe austreten. Da die zur Verfügung stehenden Deponien für Schlacke in immer geringerem. Umfange zur Verfügung stehen, bereitet die Ablagerung der Schlacke grosse Probleme. Auch die Verwendung im Strassenbau ist durch den bisher hohen Schadstoffgehalt und die Zersetzungsgefahr auf vereinzelte Anwendungsgebiete beschränkt.

In der Publikation DE 37 00 608 A1 wird ein Verfahren und eine Vorrichtung zur Schlackenaufbereitung beschrieben, bei welchem nach dem Abschrecken der Schlacke im bekannten Nassentschlacker, bzw. Wasserbad Feinanteile mit einem Korn bis 1 mm aus der Schlacke entfernt werden. Die verbleibende Schlacke weist einen reduzierten Schadstoffgehalt auf und ist unter geeigneten Voraussetzungen für den Strassen- und Wegebau einsetzbar. Dieses bekannte Verfahren zur Reinigung der Schlacke vermag die steigenden Ansprüche an den minimalen Gehalt von Schadstoffen in der Schlacke noch nicht zu befriedigen. Die gereinigte Schlacke enthält weiterhin 'Restteile von wasserlöslichen Schadstoffen und auch von organischen Stoffen, welche die Schlacke zersetzen. Der Chloridgehalt kann z.B. immer noch bis 50% des ursprünglichen Gehaltes betragen. Nachteilig ist auch der Umstand, dass die Schlacke nach dem Abschrecken im Wasserbad zwischengelagert werden muss und damit erhebliche Lagervolumen notwendig sind. Das anfallende Tropfwasser muss ebenfalls entsorgt werden, da es verschmutzt ist. Die Schadstoffe des Staubanteiles werden durch das Abschreckbad in die Schlacke geschwemmt und haften nach dem Trocknen in den Poren. Die vorgeschlagene Trocknung auf eine Restfeuchte von 1 % erfordert bei den grossen Mengen von Schlacke einen sehr hohen Energieaufwand. Die gereinigte Schlacke ist bei diesem hohen Trocknungsgrad als Baumaterial nicht geeignet und muss z.B. für den Wege- und Strassenbau wieder befeuchtet werden.

Es ist Aufgabe der vorliegenden Erfindung, ein Verfahren aufzuzeigen, mittels welchem die in Abfallverbrennungsanlagen anfallende Schlacke und andere Verbrennungsrückstände sc behandelt werden können, dass der Anteil an löslichen Schadstoffen in der behandelten Schlacke so tief ist, dass keine Umweltgefährdung auftritt, die Schlacke möglichst frei von organischen Stoffer- ist, und aus dem Behandlungsverfahren kein Staub oder Feinanteil anfällt, welcher schwer entsorgbar ist. Im weiteren soll das Verfahren die im Verbrennungsofen anfallende Energie nutzen und die behandelte Schlacke soll ohne Bindemittel oder Zuschlagstoffe als Baustoff verwendet werden können. Der Bedarf an Fremdenergie soll reduziert, und der Gesamtnutzungsgrad der Anlage erhöht werden. Die Vorrichtung zur Durchführung dieses Verfahrens soll einfach aufgebautsein und ohne Einsatz von Waschwasser betrieben werden können. Sie soll im weiteren die Rückgewinnung von Schwermetallen und anderen Stoffen aus dem Behandlungsprozess ermöglichen.

Diese Aufgabe wird bei einem Verfahren nach dem Oberbegriff des Patentanspruches 1 erfindungsgemäss durch die kennzeichnenden Merkmale dieses Patentanspruches gelöst. Die vorrichtungsgemässe Lösung dieser Aufgabe ist in den kennzeichnenden Merkmalen des Patentanspruches 7 definiert. Vorteilhafte Weiterbildungen der Erfindung ergeben sich nach den Merkmalen der abhängigen Patentansprüche.

Beim erfindungsgemässen Verfahren und der Vorrichtung wird die noch warme Schlacke direkt nach dem Verbrennungsofen überein Transportband einer Reinigungsstufe zugeführt. Grosses Grobgut und magnetische Teile werden hier aus der noch warmen Schlacke entfernt, und die Schlacke anschliessend in eine Vorwärmeinrichtung transportiert. Vor dieser Vorwärmeinrichtung werden bei Bedarf auch andere Verbrennungsrückstände, z.B. Flugasche, aus dem Rauchgaskanal in den Aufbereitungsprozess eingeführt und gemeinsam mit der Schlacke behandelt. Diese Vorwärmeinrichtung wird mittels ausgebrannten, heissen Rauchgasen aus dem Rauchgaskanal der Abfallverbrennungsanlage beheizt und ermöglicht die Nutzung eines Teils der durch den Verbrennungsprozess in der Anlage entstehenden Abwärme. Diese Entnahme von Wärme aus dem Rauchgasstrom ermöglicht die Erhöhung des mengenmässigen Durchsatzes von verbranntem befall durch die Abfallverbrennungsanlage, da durch die Entnahme von Wärme die Wärmebelastung des Abhitzekessels und der Rauchgaszüge reduziert wird. Diese Massnahme führt bei bestehenden Anlagen zu erheblichen Verbesserungen, da durch die Zunahme des Heizwertes des Abfalles diese Anlagen zumeist nicht mehr mit der ursprünglichen Durchsatzmenge beschickt werden können, sondern der Durchsatz auf die maximal zulässige Wärmebelastung der Rauchgaszüge und des Kessels reduziert werden muss. Da ein grosser Volumenstrom von heissen Rauchgasen zur Verfügung steht, können auch grosse Mengen von Verbrennungsrückständen, wie sie die Schlacke bildet, erwärmt werden. Dabei ist eine Erwärmung der Schlacke mittels der heissen Rauchgase auf einige hundert Grad Celsius möglich, wobei die obere Grenze bei etwa 600° C liegen dürfte. Die vorgewärmte Schlacke wird nun in einen Schmelzofen eingeführt, welcher mit Zusatzenergie beheizt wird. Mittels der Zusatzenergie wird die Schlacke nun noch weiter erwärmt, bis sie ihren Schmelzpunkt überschreitet, welcher normalerweise höher als 600° C liegt. Die in der Schlacke noch enthaltenen organischen Stoffe können bei diesen Temperaturen verbrennen oder Verbindungen mit anderen Stoffbestandteilen der Schlacke eingehen. Bei Erwärmung auf über 800° C verdampfen die in der Schlacke enthaltener. Schadstoffe oder gehen stabile und unschädliche Verbindungen mit anderen Stoffen der Schlacke ein. Die gereinigte und behandelte flüssige Schlacke wird nach dem Schmelzofen abgekühlt, wobei eine glasartige feste Masse entsteht. Je nach Art der Kühlung und der Ausbringung aus dem Schmelzofen können Stücke von gewünschter Grösse geformt werden, z.B. als Formkörper oder körnige Bruchstücke. Diese glasartigen Stücke sind ohne weitere Behandlung und Zuschlagstoffe als Baumaterial verwendbar, und die noch auswaschbaren Stoffe liegen weit unter den entsprechend den heutigen Umweltvorschriften zulässigen Grenzwerter.. Da keine organischen Stoffe mehr enthalten sind, welche sich. zersetzen oder zersetzt werden, ist die behandelte Schlacke stabil.

Parallel zur Vorwärmeinrichtung ist ein Pyrolyseofen angeordnet, welcher als Gaserzeuger auf pyrolytischer Basis ausgebildet ist. Dem Rauchgaskanal, bzw. dem Abhitzekessel der Abfallverbrennungsanlage wird an geeigneter Stelle ein zweiter heisser Teilgasstrom entnommen. Dabei handelt es sich um vollständig verbrannte Rauchgase mit einer für die nachfolgenden Prozesse geeigneten Temperatur. Der abgezweigte Rauchgasstrom dient der Beheizung des Pyrolyseofens und der darin eingebrachten Abfallstoffe. Da der abgezweigte Rauchgasstrom Temperaturen bis 650° C aufweist genügt dies für die pyrolytische Zersetzung der meisten Stoffe. Andernfalls kann durch teilweise Verbrennung der Abfälle im Pyrolyseofen die Temperatur zusätzlich erhöht werden. Der Betrieb derartiger Pyrolyseanlagen ist an sich bekannt. Das Pyrolysegas wird in den Schmelzofen geführt und ist der Brennstoffzur Erzeugung der Zusatzenergie zum Schmelzen der Schlacke. Am Schmelzofen ist dazu ein Brennerangeordnet, mittels welchem die für den Schmelzvorgang notwendige Energie durch Verbrennung des im Pyrolyseofen erzeugten Pyrolysegases erzeugt wird. Für den ganzen Prozess der Erwärmung und Aufschmelzung der Schlacke oder anderer Verbrennungsrückstände ist normalerweise keine zusätzliche Fremdenergie nötig, da sämtliche Energie aus dem Kreislauf der Abfallverbrennungsanlage und einem zusätzlichen Abfallkreislauf entnommen wird. Je nach Aufbau des Verfahrens und der Anlage sind Start- und/oder Stützbrenner vorhanden. Der zusätzliche Abfallkreislauf wird dabei durch die Pyrolyseanlage gebildet. In dieser Anlage lassen sich in vorteilhafter Weise Altholz, Klärschlamm, Altpneus und ähnliche Stoffe zu brennbarem Pyrolysegas umwandeln. Diese Abfallstoffe fallen heute bei den Abfallverbrennungsanlagen als Ueberschussmaterial an, da sie bei den überlasteten Anlagen nicht mehr mitverbrannt werden können.

Die in der Vorwärmeinrichtung im Pyrolyseofen und im Schmelzofen anfallenden begase werden durch einen Kondensatorgeführt, in welchem das Abgas auf eine Temperatur abgekühlt wird, bei welcher mindestens ein Teil der Schwermetalle und deren Verbindungen kondensieren. Dieses Kondensat wird aufgefangen und anschliessend regeneriert und der Wiederverwertung zugeführt. Das aus dem Kondensator austretende Abgas, welches nur noch einen Teil der ursprünglichen Schadstofffracht aufweist, wird in die Zugangsleitung zum Rauchgasreinigerzurückgeführt und im bereits bestehenden Rauchgasreiniger der Verbrennungsanlage gereinigt. Erst dann wird es aus dem Prozess entlassen und über einen Kamin an die Umwelt abgegeben. Im Reinigungsprozess der Schlacke fallen keine Schadstoffe an, welche speziell behandelt und entsorgt werden müssten. Das im Kondensatoranfallende Kondensat kann als Rohstoff für weitere Verarbeitungsschritte betrachtet werden. Die am Ende des Prozesses anfallende glasartige Schlacke kann beliebig lange und ohne besondere Massnahmen gelagert werden, da sie keine wasserlöslichen Bestandteile aufweist und stabil ist.

Der Einsatz des erfindungsgemässen Verfahrens und der Vorrichtung erlaubt eine Erhöhung der Durchsatzleistung dervorgeschalteten Abfallverbrennungsanlage, da Abwärme aus dem Rauchgaskanal für den Betrieb der Vorwärmeinrichtung und des Pyrolyseofens verwertet wird. Wie erwähnt, werden infolge der Zunahme des Brennwertes der an die Abfallverbrennungsanlagen angelieferten Abfälle vor allem bei bestehenden Anlagen die nach dem Verbrennungsraum angeordneten Abhitzekessel und Rauchgaskanäle überlastet. Dies hat zur Folge, dass der Durchsatz von Abfall durch den Verbrennungsprozess reduziert werden muss, und damit in der Anlage nicht mehr die gewünschten Mengen verarbeitet werden können. Durch die Entnahme eines Teils des heissen Rauchgasstromes aus dem Rauchgaskanal, bzw. dem Abhitzekessel, wird die Belastung dieser Teile der Abfall\-erbrennungsanlage reduziert, und die Verarbeitungskapazität der Gesamtanlage kann entsprechend wieder erhöht werden. Der Betrieb der Abfallverbrennungsanlage wird dabei funktionell in keiner Weise beeinträchtigt, sondern im Gegenteil verbessert. Die erstarrte Schlackenschmelze ist ohne weitere Behandlung als Baustoff für den Strassenbau, aber auch als Füllmaterialien bei anderen Bauelementen geeignet. Es fallen keine staubförmigen Fraktionen an. Allfällig eingesetzes Kühlwasser ist infolge der Wasserunlöslichkeit nicht verschmutzt und kann im Kreislauf verwendet werden. Das Verfahren und die Vorrichtung ermöglichen somit die Behandlung von schadstoffhaltiger Schlacke und anderen Verbrennungsrückständen bei Aballverbrennungsanlagen unter Nutzung dervorhandenen Energieströme und erlauben die Herstellung eines Baustoffes, welcher die Umwelt in keiner Weise gefährdet. In einem weiteren Schritt werden die aus der Schmelze abgeführten Schadstoffe aus dem Abgasstrom abgetrennt und fallen dabei in einer Form an, welche ebenfalls der Wiederverwertung zugeführt werden kann. Die Gesamtenergiebilanz und die Leistungsbilanz der erfindungsgemässen Anlage ist gegenüber bekannten Einrichtungen besonders vorteilhaft.

Im folgenden wird die Erfindung mit Hilfe der Zeichnungen, welche Ausführungsbeispiele darstellen, näher erläutert. Es Zeigen:
Fig. 1 eine Vorrichtung, bzw. Anlage zur Aufbereitung von Schlacke und Flugasche einer vorgeschalteten Abfallverbrennungsanlage in schematischer Darstellung.
Fig. 2 den Aufbau der Grobreinigung in der Anlage gemäss Figur 1 in schematischer Darstellung.

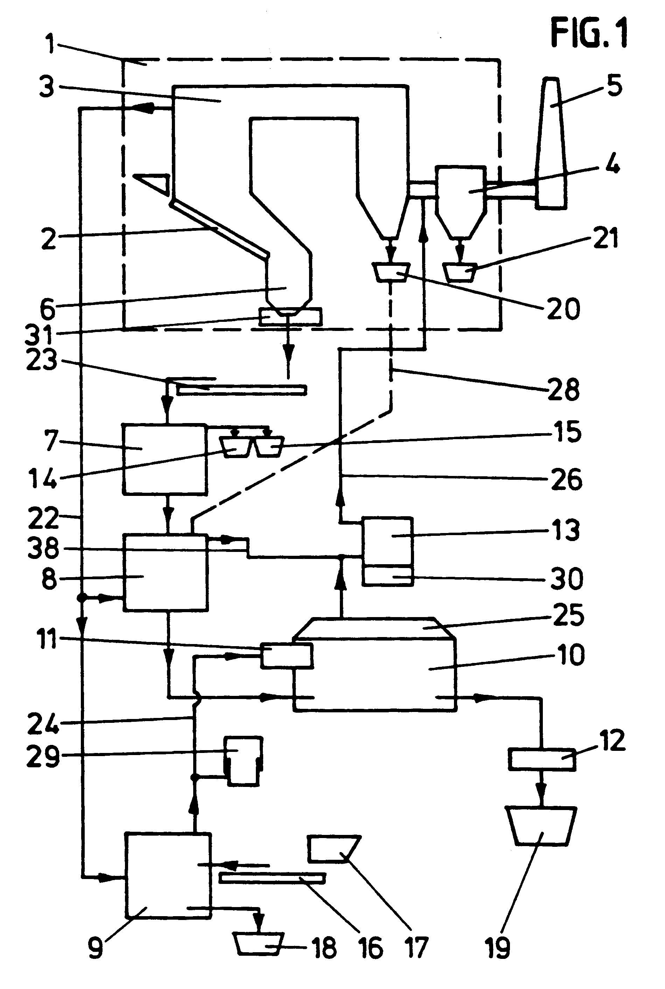

Die in Figur 1 schematisch dargestellte Abfallverbrennungsanlage 1 besteht unteranderem aus einem Verbrennungsrost 2, einem Rauchgaskanal, bzw. Abhitzekessel, 3 und einer anschliessenden Rauchgasreinigung 4 mit einem Abluftkamin 5. Am Ende des Verbrennungsrostes 2 ist ein Schlackenaustritt 6 angeordnet, überwelchen die Schlacke ohne Abschreckung in einem Wasserbad oder einem Nassentschlacker aus der Abfallverbrennungsanlage 1 ausgetragen wird. Am Ende des Schlackenaustrittes 6 befindet sich eine Sperreinrichtung 31 in der Form einer Zellenschleuse, welche den Brennraum gegen die Umgebungsluft abdichtet. Die Abfallverbrennungsanlage 1 weist im weiteren einen Sammelbehälter 20 für den Flugstaub aus dem Rauchgaskanal 3 und einen Sammelbehälter 21 für die Rückstände aus dem Rauchgasreiniger 4 auf.

Nach dem Schlackenaustritt 6 und dem Verlassen der Sperreinrichtung 31 wird die warme und trockene Schlacke über eine Transporteinrichtung 23 in einen Grobreiniger 7 transportiert. Die Transporteinrichtung 23 ist dabei zweckmässigerweise wärmebeständig ausgebildet, da sich in der Schlacke noch glühende Metallteile befinden können, oder unverbrannte Abfallteile sich erneut entzünden können. Der Grobreiniger 7 dient dazu, aus dem Schlackenstrom unverbrannte und andere grobe Teile sowie Eisenbestandteile zu entfernen.

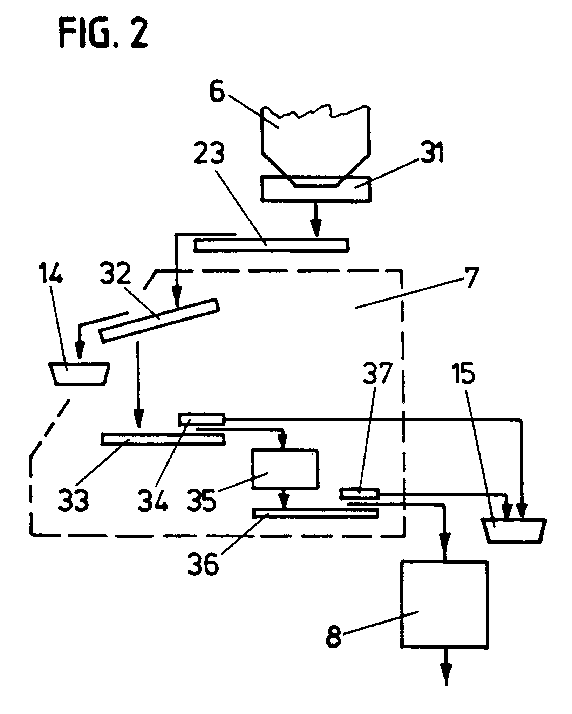

In Figur 2 sind die einzelnen Elemente des Grobreinigers 7 dargestellt. Von der Transporteinrichtung 23 gelangt die Schlacke auf einen Abscheider 32. Im Abscheider 32 wird die aufgebrachte Schlacke von grösseren unverbrannten Teilen und von Grobgut gereinigt, indem dieser Abscheider 32 nur Teile von einer bestimmten Maximalgrösse durchlässt. Das abgeschiedene Grobgut fällt in einen Grobgutbehälter 14 und wird von hier der Wieder verarbeitung oder geordneten Deponie zugeführt. Unverbranntes Grobgut wird normalerweise wieder in den Verbrennungsofen 1 zurückgeführt. Die im Abscheider 32 vom Grobgut gereinigte Schlacke gelangt auf eine Fördereinrichtung 33, welche mit einem Magnetabscheider 34 versehen ist. Mittels dieses Magnetabscheiders 34 wird aus der Schlacke alles magnetische Material, d.h. die Eisenbestandteile, entfernt und in einem Sammelbehälter 15 zur Wiederverwendung zwischengelagert. Erfahrungsgemäss werden mittels des Abscheiders 32 und des Magnetabscheiders 34 ca. 10 bis 20 % des Gewichtes aus der am Schlacker austritt anfallenden Schlacke entfernt. Diese Teilmenge kann zum grössten Teil wieder verwertet werden. Nach dem Magnetabscheider 34 gelangt die Schlacke von der Fördereinrichtung 33 in einen Brecher 35. Dieser Brecher hat im dargestellten Beispiel den Zweck, die Schlacke in Bruchstücke mit einer Korngrösse von maximal 100 mm zu trennen, und dadurch eine zusätzliche Nachbehandlung zu ermöglichen. Dieses zusätzliche Brechen der Schlacke erweist sich als zweckmässig, da die auf eine weitere Fördereinrichtung 36 fallende Schlacke an einem zweiten Magnetabscheider 37 vorbeigeführt und vor dem Brecher in grössere Schlackenklumpen eingebundene magnetische Teile nun noch entfernt werden können. Das im Magnetabscheider 37 anfallende magnetische Gut wird ebenfalls in den Sammelbehälter 15 gefördert und dort zwischengelagert.

Nach dem Grobreiniger 7 ist wie aus Figur 1 ersichtlich eine Vorwärmeinrichtung 8 angeordnet, durch welche der vorgereinigte Schlackenstrom geführt wird. Diese Vorwärmeinrichtung 8 ist über eine Rauchgasleitung 22 mit dem Rauchgaskanal 3 der Abfallverbrennungsanlage 1 verbunden. Ueber diese Rauchgasleitung 22 wird dem Rauchgaskanal 3 vollständig ausgebranntes heisses Rauchgas entnommen, wobei dieses bei der dargestellten Anlage eine Temperatur von ca. 650° C aufweist. Dieser Rauchgasteilstrom wird durch die Vorwärmeinrichtung 8 geführt und erwärmt dabei den Schlackenstrom. Bei günstigen Durchsatzverhältnissen kann die Schlacke bis auf etwa 600° C erwärmt werden. Die dargestellte Anlage ist so ausgebildet, dass wahlweise über eine Transportleitung 28 auch die im Behälter 20 gesammelte Flugasche in die Vorwärmeinrichtung 8 eingebracht und durch den nachfolgenden Prozess geführt werden kann.

Parallel zur Vorwärmeinrichtung 8 ist ein Pyrolyseofen 9 angeordnet, in welchem Abfallstoffe wie Holz, Klärschlamm, Altpneus oder ähnliches verwertet werden. Im beschriebenen Beispiel wird der Pyrolyseofen 9 über die Rauchgasleitung 22 ebenfalls mit dem Rauchgaskanal 3 verbunden und mit heissen Rauchgasen aus dem Abfallverbrennungsofen 1 beheizt. Wenn die Temperatur der heissen Rauchgase, welche über die Rauchgasleitung 22 in den Pyrolyseofen 9 eingeführt werden zur einwandfreien Vergasung der Abfallstoffe nicht genügt, ist der Pyrolyseofen 9 so ausgebildet, dass die in den Ofen eingebrachten Abfallstoffe teilweise verbrannt, und dadurch zusätzliche Wärme erzeugt werden kann. Bei der pyrolytischen Umwandlung der Abfallstoffe Holz, Altpneus oder Klärschlamm entsteht eine sehr geringe Menge Asche, welche im Aschenbehälter 18 gesammelt wird. Auch diese Asche kann nach vorheriger Abtrennung der Feststoffe und Eisenteile über die Vorwärmeinrichtung 8 in den Behandlungsprozess eingeführt werden. Die für die Pyrolyse geeigneten Abfälle, im dargestellten Beispiel Altgummi, werden vom Abfallbunker 17 über die Beschickungseinrichtung 16 in den Pyrolyseofen 9 eingebracht. Sowohl die zur Vorwärmung in der Vorwärmeinrichtung 8, wie auch die im Pyrolyseofen 9 genutzten Rauchgase werden aufeinem tieferen Temperaturniveau über die Leitung 38 und eine weitere nicht dargestellte Leitung wieder in den Rauchgaskanal 3 zurückgeführt.

Das im Pyrolyseofen 9 erzeugte Pyrolysegas und der in der Vorwärmeinrichtung 8 erwärmte Strom von Schlacke und anderen Verbrennungsrückständen werden in einen Schmelzofen 10 eingebracht. Das Pyrolysegas strömt über eine Transportleitung 24 in einen Brenner 11 am Schmelzofen 10 und wird hier verbrannt. Zur Gewährleistung des kontinuierlichen Prozessablaufes ist in die Transportleitung 24 ein Gasspeicher 29 eingebaut. Mit Hilfe der Verbrennungswärme des Pyrolysegases werden die in den Schmelzofen 10 eingebrachten auf eine Temperatur von ca. 600° C vorgewärmten Verbrennungsrückstände bis auf eine Temperatur von mindestens 800° C, vorzugsweise von ca. 1400° C erwärmt und vollständig aufgeschmolzen. Allfällig vorhandene organische Stoffe werden in der Vorwärmeinrichtung 8 und im Schmelzofen 10 noch vollständig verbrannt oder gehen Verbindungen mit anderen Stoffen ein, welche stabil und langfristig unlöslich sind. Die in den Verbrennungsrückständen enthaltenen übrigen Schadstoffe gehen ebenfalls feste Verbindungen mit anderen Stoffen ein oder verdampfen zum grössten Teil im Schmelzofen 10. Die entstehenden Abgase mit den flüchtigen Schadstoffanteilen werden in einem Abgassammler 25 aufgefangen und über eine Abgasleitung 26 an geeigneter Stelle in den Rauchgaskanal 3 der Abfallverbrennungsanlage 1 zurückgeführt. In diese Abgasleitung 26 werden auch die Abgase aus der Vorwärmeinrichtung 8 über die Leitung 38 eingespiesen sowie die Abgase aus dem Pyrolyseofen 9. Diese Rückführung der Abgase erfolgt auf der Eingangsseite des Rauchgasreinigers 4, wodurch gewährleistet ist, dass auch diese Abgase von allfälligen Schadstoffen gereinigt, und erst dann über den Kamin 5 aus der Anlage ausgestossen werden. Zusätzlich ist in die Abgasleitung 26 eine Kühleinrichtung in der Form eines Kondensators 13 eingebaut, mit welchem insbesondere die Schwermetalldämpfe aus dem Abgasstrom ausgeschieden werden. Die im Kondensator 13 aus den Abgasen des Schmelzofens 10 ausgeschiedenen Schadstoffe werden in einem Kondensatsammler 30 aufgefangen und der Wiederverwertung zugeführt. Bei geeigneter bekannter Ausgestaltung des Kondensators 13 lassen sich einzelne Fraktionen abtrennen, welche eine Wiederverwertung dieser Schadstoffe zulassen. Die im Schmelzofen 10 erzeugte Schmelze von Verbrennungsrückständen wird auf diese Weise weitgehendst von Schadstoffen gereinigt oder diese gehen in der Schmelze Verbindungen ein, welche nicht mehr wasserlöslich sind. An der Austrittsseite des Schmelzofens 10 wird die Schmelze in eine Kühleinrichtung 12 geführt, welche im dargestellten Beispiel durch ein Wasserschockbad gebildet ist. In diesem Schockbad wird die flüssig eingebrachte Schlacke gesprengt und abgekühlt, wobei sie bei geeigneter Behandlungsart in den gewünschten Korngrössen anfällt, welche direkt der Weiterverarbeitung und Weiterverwendung, zum Beispiel im Strassen- und Wegebau zugeführt werden kann. Von der Kühleinrichtung 12 fällt die glasartige ausgehärtete Schlacke in einen Schlackenbunker 19, wo sie ohne Probleme gelagert oder zum Verwendungsort transportiert werden kann.

Die hier dargestellte Anlage bedarf ausser der Energie für den Betrieb der mechanischen Antriebe und allfälliger Hilfs- oder Stützwärmequellen praktisch keiner zusätzlichen Fremdenergie. Alle benötigte Energie wird dem Rauchgasstrom der Abfallverbrennungsanlage im Rauchgaskanal entnommen oder durch die pyrolytische Verwertung von hochwertigen Abfallstoffen im Pyrolyseofen 9 erzeugt. Sofern genügendhochwertige Abfallstoffe vorhanden sind, welche nicht über die Abfallverbrennungsanlage 1 verbrannt werden können, wird der Pyrolyseofen 9 so gross ausgelegt, dass mehr Pyrolysegas erzeugt werden kann als für den Betrieb des Schmelzofens 10 benötigt wird. Dieses überschüssige Pyrolysegas dient dann als Rohstoff für eine nachgeschaltete, nichtdargestellte, thermische Energieerzeugungsanlage. Mit der dargestellten Anlage lassen sich die mengenmässig wesentlichen im Verbrennungsprozess anfallenden Verbrennungsrückstände, insbesondere die Schlacke, behandeln, und die im Schlackenbunker 19 anfallende behandelte Schlacke kann unbedenklich als Baustoff verwendet oder für Aufschüttungen eingesetzt oder in Deponien abgelagert werden.

## Patentansprüche

1. Verfahren zum Aufbereiten von Schlacke oder anderen Verbrennungsrückständen aus Abfallverbrennungsanlagen, wobei nach dem Austritt aus dem Verbrennungsofen unverbranntes Grobgut und magnetische Teile aus der Schlacke ausgeschieden und die heissen Rauchgase über einen Rauchgaskanal abgeführt werden, dadurch gekennzeichnet, dass die Schlacke direkt nach dem Verbrennungsofen und ohne vorherige Abschreckung in einem Wasserbad eine Grobreinigung durchläuft und Grobgut und magnetische Teile von der Schlacke abgetrennt werden, die trockene und grob gereinigte Schlacke wieder auf mindestens 800° C erwärmt und anschliessend aufgeschmolzen wird, mindestends ein Teil der benötigten Wärme durch einen Teilstrom heisser Rauchgase aus dem Rauchgaskanal des Verbrennungsofens entnommen und durch die Schlacke geführt wird, die in der Schlacke enthaltenen Schadstoffe mindestens teilweise verbrannt oder verdampft und die gasförmigen Anteile als Abgasstrom von der Schlacke abgetrennt und die Schadstoffe durch einen Kondensationsprozess der Wiederverwertung zugeführt werden und anschliessend die flüssige Schlacke abgekühlt und zu glasartigen lagerfähigen Feststoffkörpern verfestigt wird.

2. Verfahren nach Patentanspruch 1, dadurch gekennzeichnet, dass zusätzlich zur Teilerwärmung der Schlacke mit Hilfe des Teilstromes heisser Rauchgase aus dem Rauchgaskanal des Verbrennungsofens und daran anschliessend der erwärmten Schlacke zusätzlich ein brennbarer Stoff oder ein Stoffgemisch zugeführt und durch Verbrennen dieses Brennstoffes die Schlacke über den Schmelzpunkt erwärmt wird.

3. Verfahren nach einem der Patentansprüche 1 oder 2, dadurch gekennzeichnet, dass nach der Grobreinigung Flugasche aus dem Rauchgaskanal zur Schlacke beigegeben und beide Verbrennungsrückstände gemeinsam weiter aufbereitet werden.

4. Verfahren nach einem der Patentansprüche 1 bis 3, dadurch gekennzeichnet, dass dem heissen Rauchgasstrom der Verbrennungsanlage ein zweiter Teilstrom entnommen und mit diesem heissen Rauchgasstrom ein Pyrolyseofen beheizt, in diesem Pyrolyseofen durch Vergasen von Abfallstoffen ein brennbares Pyrolysegas als Brennstoff erzeugt, das Pyrolysegas mit der Schlacke zusammengebracht und verbrannt wird und durch die entstehende Wärme die Schlacke und/oder Verbrennungsrückstände geschmolzen werden.

5. Verfahren nach Patentanspruch 4, dadurch gekennzeichnet, dass durch teilweises Verbrennen der Abfallstoffe im Pyrolyseofen zusätzliche Wärme erzeugt wird.

6. Verfahren nach Patentanspruch 1, dadurch gekennzeichnet, dass die Schlacke nach der Grobreinigung in Teilstücke von maximal 100 mm Korngrösse gebrochen und durch einen zweiten Magnetabscheider geführt wird.

7. Vorrichtung zum Aufbereiten von Schlacke und anderen Verbrennungsrückständen bei Abfallverbrennungsanlagen mit einem Verbrennungsofen ohne Schlackenkühlung, einem Rauchgaskanal und einem daran anschliessenden Rauchgasreiniger, dadurch gekennzeichnet, dass direkt nach dem Schlackenaustritt (6) aus der Verbrennungsanlage (1) eine wärmebeständige Transporteinrichtung (23) angeordnet ist, diese Transporteinrichtung (23) zu einem Grobreiniger (7) mit einem Abscheider (32) für Grobgut und mindestens einem Magnetabscheider (34) führt, nach dem Grobreiniger (7) eine durch Rauchgase der Verbrennungsanlage (1) beheizte Einrichtung (8) zur Vorerwärmung der Schlacke, und daran anschliessend ein Schmelzofen (10) angeordnet sind.

8. Vorrichtung nach Patentanspruch 7, dadurch gekennzeichnet, dass nach dem Magnetabscheider (34) ein Brecher (35), und nach dem Brecher (35) ein zweiter Magnetabscheider (37) angeordnet ist.

9. Vorrichtung nach Patentanspruch 7, dadurch gekennzeichnet, dass die Einrichtung (8) zur Vorwärmung der Schlacke über eine Rauchgasleitung (22) mit dem Rauchgaskanal (3) der Verbrennungsanlage (1) verbunden und von heissen Abgasen aus dem Rauchgaskanal (3) durchströmt ist.

10. Vorrichtung nach einem der Patentansprüche 7 bis 9, dadurch gekennzeichnet, dass parallel zur Vorwärmeinrichtung (8) und vor dem Schmelzofen (10) ein Pyrolyseofen (9) angeordnet ist, dieser Pyrolyseofen (9) ebenfalls mit heissem Rauchgas aus der Verbrennungsanlage (1) beheizt und über Leitungen (22) mit dem Abgaskanal (3) verbunden ist, zwischen Pyrolyseofen (9) und Schmelzofen (10) eine Transportleitung (24) für das im Pyrolyseofen (9) erzeugte Pyrolysegas angeordnet ist und der Schmelzofen (10) eine Verbrennungseinrichtung (11) für die Pyrolysegase aufweist.

11. Vorrichtung nach einem der Patentansprüche 7 bis 10, dadurch gekennzeichnet, dass der Schmelzofen (10) einen Abgassammler (25) aufweist und dieser Abgassammler (25) über eine Abgasleitung (26) mit dem Rauchgaskanal (3) oder der Eingangsseite des Rauchgasreinigers (4) der Verbrennungsanlage (1) verbunden ist.

12. Vorrichtung nach Patentanspruch 11, dadurch gekennzeichnet, dass in der Abgasleitung (26) ein Kondensator (13) eingebaut ist.

13. Vorrichtung nach einem der Patentansprüche 7 bis 12, dadurch gekennzeichnet, dass nach dem Schmelzofen (10) eine Kühleinrichtung (12) mit Luft oder Wasser als Kühlmittel für die Schlacke angeordnet ist.

14. Vorrichtung nach einem der Patentansprüche 7 bis 13, dadurch gekennzeichnet, dass die Abgasleitungen (26, 38) der Vorwärmeinrichtung (8) des Pyrolyseofens (9) und des Schmelzofens (10) mit dem Eingangskanal der Rauchgasreinigung (4) der Abfallverbrennungsanlage (1) verbunden sind.

## Claims

1. Method for treating slag or other combustion residues from waste incineration plant, in which unburned coarse material and magnetic parts are separated from the slag after it has left the incineration furnace and the hot flue gases are removed via a flue gas conduit,
characterised in that the slag passes through a primary purifier directly after the incineration furnace and without previous quenching in a water bath and coarse material and magnetic parts are separated from the slag, the dry and roughly purified slag is re-heated to at least 800°C and then melted down, at least some of the heat which is required is taken by a branch flow of hot flue gases from the flue gas conduit of the incineration furnace and conveyed through the slag, the harmful substances contained in the slag are at least partly burned or evaporated and the gaseous parts are separated from the slag as a waste gas flow, the harmful substances are delivered for re-use through a condensation process, and the liquid slag is then cooled and solidified to form glasslike solid bodies which can be stored.

2. Method according to claim 1, characterised in that, in addition to the partial heating of the slag by means of the branch flow of hot flue gases from the flue gas conduit of the incineration furnace, and a combustible substance or a mixture of substances is then additionally delivered to the heated slag and the slag is heated to above melting point by burning this fuel.

3. Method according to claim 1 or 2, characterised in that fly ash from the flue gas conduit is added to the slag following primary purification and both combustion residues are treated further together.

4. Method according to one of claims 1 to 3, characterised in that a second branch flow is taken from the hot flue gas flow of the incineration plant, a pyrolysis furnace is heated by this hot flue gas flow, a combustible pyrolysis gas is produced as a fuel in this pyrolysis furnace by gasifying waste matter, the pyrolysis gas is combined with the slag and burned, and the slag and/or combustion residues is/are melted by the resulting heat.

5. Method according to claim 4, characterised in that additional heat is produced by partially burning the waste matter in the pyrolysis furnace.

6. Method according to claim 1, characterised in that, following primary purification, the slag is crushed into fragments having a maximum particle size of 100 mm and conveyed through a second magnetic separator.

7. Device for treating slag and other combustion residues in waste incineration plant, comprising an incineration furnace without slag cooling, a flue gas conduit and an adjoining flue gas purifier, characterised in that a heat-resistant transport device (23) is arranged directly after the slag outlet (6) from the incineration plant (1), this transport device (23) leads to a primary purifier (7) with a separator (32) for coarse material and at least one magnetic separator (34), a device (8), which is heated by flue gases from the waste incineration plant (1), for preheating the slag is arranged after the primary purifier (7), and a melting furnace (10) is arranged adjacent to the device (8).

8. Device according to claim 7, characterised in that a crusher (35) is arranged after the magnetic separator (34), and a second magnetic separator (37) is arranged after the crusher (35).

9. Device according to claim 7, characterised in that the device (8) for preheating the slag is connected via a flue gas line (22) to the flue gas conduit (3) of the incineration plant (1), and hot waste gases from the flue gas conduit (3) flow through this device.

10. Device according to one of claims 7 to 9, characterised in that a pyrolysis furnace (9) is arranged parallel to the preheating device (8) and before the melting furnace (10), this pyrolysis furnace (9) is also heated by hot flue gas from the incineration plant (1) and is connected via lines (22) to the waste gas conduit (3), a transport line (24) for the pyrolysis gas produced in the pyrolysis furnace (9) is arranged between the pyrolysis furnace (9) and the melting furnace (10), and the melting furnace (10) comprises a combustion device (11) for the pyrolysis gas.

11. Device according to one of claims 7 to 10, characterised in that the melting furnace (10) comprises a waste gas collector (25) and this waste gas collector (25) is connected via a waste gas line (26) to the flue gas conduit (3) or the feed side of the flue gas purifier (4) of the incineration plant (1).

12. Device according to claim 11, characterised in that a condenser (13) is fitted in the waste gas line (26).

13. Device according to one of claims 7 to 12, characterised in that a cooling device (12) with air or water as the coolant for the slag is arranged after the melting furnace (10).

14. Device according to one of claims 7 to 13, characterised in that the waste gas lines (26, 38) of the preheating device (8) of the pyrolysis furnace (9) and of the melting furnace (10) are connected to the feed conduit of the flue gas purifier (4) of the waste incineration plant (1).

## Revendications

1. Procédé de traitement de scories ou d'autres résidus de combustion provenant d'installations d'incinération de déchets, dans lequel, après la sortie hors du four d'incinération, de la matière grossière non brûlée et des particules magnétiques sont séparées des scories, les gaz de fumée chauds étant évacués par l'intermédiaire d'un canal à gaz de fumée, caractérisé en ce que les scories traversent une épuration grossière directement après le four d'incinération et sans refroidissement brusque préalable dans un bain aqueux, de la matière grossière et des particules magnétiques étant séparées des scories, en ce que les scories sèches et grossièrement épurées sont à nouveau chauffées à au moins 800°C et ensuite fondues, au moins une partie de la chaleur nécessaire étant prélevée par un courant partiel des gaz de fumée chauds provenant du canal à gaz de fumée du four d'incinération et étant guidée à travers les scories, en ce que les substances nuisibles contenues dans les scories sont au moins partiellement brûlées ou évaporées, en ce que les fractions gazeuses sont séparées des scories sous la forme d'un courant de gaz d'échappement, en ce que les substances nuisibles sont amenées à une réutilisation par un processus de condensation, et en ce qu'ensuite les scories liquides sont refroidies et solidifiées en corps solides vitreux entreposables.

2. Procédé suivant la revendication 1, caractérisé en ce que, en supplément au chauffage partiel des scories à l'aide du courant partiel de gaz de fumée chauds provenant du canal à gaz de fumée du four d'incinération et à la suite de cela, une substance ou un mélange de substances combustible est amené en supplément aux scories chauffées et en ce que les scories sont, par combustion de ce combustible, chauffées au-dessus du point de fusion.

3. Procédé suivant l'une des revendications 1 et 2, caractérisé en ce que, après l'épuration grossière, des cendres volantes provenant du canal à gaz de fumée sont ajoutées aux scories et en ce que les deux résidus de combustion sont conjointement traités ultérieurement.

4. Procédé suivant l'une des revendications 1 à 3, caractérisé en ce qu'un deuxième courant partiel est prélevé du courant de gaz de fumée chaud de l'installation d'incinération, en ce qu'un four de pyrolyse est chauffé avec ce courant de gaz de fumée chaud, en ce qu'un gaz de pyrolyse combustible est produit, comme combustible, dans ce four de pyrolyse, par gazéification de déchets, en ce que le gaz de pyrolyse est mis en présence des scories et est brûlé et en ce que les scories et/ou les résidus de combustion sont fondus par la chaleur formée.

5. Procédé suivant la revendication 4, caractérisé en ce que de la chaleur supplémentaire est produite dans le four de pyrolyse par une combustion partielle des déchets.

6. Procédé suivant la revendication 1, caractérisé en ce que les scories sont, après l'épuration grossière, fragmentées en morceaux d'une dimension granulaire d'au maximum 100 mm et en ce qu'elles sont guidées à travers un deuxième séparateur magnétique.

7. Dispositif de traitement de scories et d'autres résidus de combustion dans des installations d'incinération de déchets, comprenant un four d'incinération sans refroidissement des scories, un canal à gaz de fumée et un épurateur de gaz de fumée raccordé à celui-ci, caractérisé en ce que, directement après la sortie des scories (6) provenant de l'installation d'incinération (1), est agencé un dispositif de transport résistant à la chaleur (23), en ce que ce dispositif de transport (23) conduit à un épurateur grossier (7) comprenant un séparateur (32) pour la matière grossière et au moins un séparateur magnétique (34), et en ce qu'après l'épurateur grossier (7) sont agencés un dispositif (8) de préchauffage des scories qui est chauffé par des gaz de fumée de l'installation d'incinération (1) et à la suite de celui-ci un four de fusion (10).

8. Dispositif suivant la revendication 7, caractérisé en ce que, après le séparateur magnétique (34), est agencé un dispositif de fragmentation (35) et, après le dispositif de fragmentation (35), un deuxième séparateur magnétique (37).

9. Dispositif suivant la revendication 7, caractérisé en ce que le dispositif (8) de préchauffage des scories est, par l'intermédiaire d'un conduit à gaz de fumée (22), en communication avec le canal à gaz de fumée (3) de l'installation d'incinération (1) et en ce qu'il est traversé par des gaz d'échappement très chauds provenant du canal à gaz de fumée (3).

10. Dispositif suivant l'une des revendications 7 à 9, caractérisé en ce qu'un four de pyrolyse (9) est agencé parallèlement au dispositif de préchauffage (8) et en amont du four de fusion (10), en ce que ce four de pyrolyse (9) est également chauffé par du gaz de fumée très chaud provenant de l'installation d'incinération (1) et est, par l'intermédiaire de conduits (22), en communication avec le canal à gaz d'échappement (3), en ce qu'un conduit de transport (24) pour le gaz de pyrolyse produit dans le four de pyrolyse (9) est agencé entre le four de pyrolyse (9) et le four de fusion (10) et en ce que le four de fusion (10) présente un dispositif de combustion (11) pour les gaz de pyrolyse.

11. Dispositif suivant l'une des revendications 7 à 10, caractérisé en que le four de fusion (10) présente un collecteur de gaz d'échappement (25) et en ce que ce collecteur de gaz d'échappement (25) est, par l'intermédiaire d'un conduit à gaz d'échappement (26), en communication avec le canal à gaz de fumée (3) ou le côté entrée de l'épurateur de gaz de fumée (4) de l'installation d'incinération (1).

12. Dispositif suivant la revendication 11, caractérisé en ce qu'un condenseur (13) est incorporé dans le conduit à gaz d'échappement (26).

13. Dispositif suivant l'une des revendications 7 à 12, caractérisé en ce qu'après le four de fusion (10) est agencé un dispositif de refroidissement (12) à air ou eau, comme moyen de refroidissement des scories.

14. Dispositif suivant l'une des revendications 7 à 13, caractérisé en ce que les conduits à gaz d'échappement (26, 38) du dispositif de préchauffage (8) du four de pyrolyse (9) et du four de fusion (10) sont reliés au canal d'entrée de l'épuration de gaz de fumée (4) de l'installation d'incinération de déchets (1).
